(19) Europäisches Patentamt
European Patent Office
Office européen des brevets

(11) **EP 3 830 450 B1**

(12) **EUROPÄISCHE PATENTSCHRIFT**

(45) Veröffentlichungstag und Bekanntmachung des Hinweises auf die Patenterteilung:
**07.08.2024   Patentblatt 2024/32**

(21) Anmeldenummer: **19736991.1**

(22) Anmeldetag: **18.06.2019**

(51) Internationale Patentklassifikation (IPC):
***F16H 57/04*** *(2010.01)*

(52) Gemeinsame Patentklassifikation (CPC):
**F16H 57/0475; F16H 57/0412;** F16H 59/14;
F16H 59/44; F16H 59/72; F16H 59/78;
F16H 2059/366; F16H 2059/605; F16H 2059/743;
F16H 2059/746

(86) Internationale Anmeldenummer:
**PCT/EP2019/065930**

(87) Internationale Veröffentlichungsnummer:
**WO 2020/025217 (06.02.2020 Gazette 2020/06)**

(54) **VERFAHREN ZUM BETREIBEN EINES ANTRIEBSSTRANGS EINES KRAFTFAHRZEUGS**

METHOD FOR OPERATING A POWERTRAIN OF A MOTOR VEHICLE

PROCÉDÉ POUR FAIRE FONCTIONNER UN GROUPE MOTOPROPULSEUR D'UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2018   DE 102018213067**

(43) Veröffentlichungstag der Anmeldung:
**09.06.2021   Patentblatt 2021/23**

(73) Patentinhaber: **Audi AG**
**85045 Ingolstadt (DE)**

(72) Erfinder: **KOPP, Andreas**
**85092 Kösching (DE)**

(74) Vertreter: **Bierschneider, Walter**
**Neubauer - Liebl - Bierschneider - Massinger**
**Münchener Straße 49**
**85051 Ingolstadt (DE)**

(56) Entgegenhaltungen:
EP-A1- 0 736 703        EP-A2- 0 787 929
WO-A1-2007/006663      DE-A1- 102013 009 275

**Beschreibung**

Die Erfindung betrifft ein Verfahren zum Betreiben eines Antriebsstrangs eines Kraftfahrzeugs, insbesondere eines Kraftwagens, gemäß dem Oberbegriff von Patentanspruch 1.

Die DE 10 2015 014 841 B3 offenbart ein Verfahren zum Betreiben einer Antriebseinrichtung eines Kraftfahrzeugs, wobei die Antriebseinrichtung über wenigstens ein wärmeerzeugendes Antriebsaggregat verfügt und eine Ist-Temperatur der Antriebseinrichtung bei laufendem Antriebsaggregat auf eine Soll-Temperatur geregelt wird. Des Weiteren wird wenigstens ein Abstellort des Kraftfahrzeugs ermittelt.

Aus der DE 196 37 817 A1 ist eine Einrichtung zum Kühlen und Vorwärmen von Getriebeöl bei Brennkraftmaschinen für Fahrzeuge bekannt. Die Einrichtung weist einen Ausgleichsbehälter, mindestens einen Wasserkühler, der mittels Motorthermostat bei Erreichen einer vorbestimmten Temperatur in den Kühlkreislauf einschaltbar ist, und einen Wasser/Öl-Wärmetauscher auf. Der DE 10 2017 101 212 A1 ist ein Verfahren zum Vorkonditionieren verschiedener Subsysteme eines Elektrofahrzeugs als bekannt zu entnehmen. Bei dem Verfahren wird eine Vorkonditionierung eines Batteriepacks, eines Fahrgastraums, eines Getriebes und eines Motors des Elektrofahrzeugs vor einer nächsten erwarteten Nutzungszeit auf der Grundlage mindestens einer Wettervorhersage geplant.

Außerdem offenbart die DE 10 2017 101 454 A1 ein elektrifiziertes Fahrzeugs, das ein Getriebe und eine elektrisch betriebene Heizvorrichtung umfasst. Die Heizvorrichtung ist dazu ausgelegt, gezielt ein Getriebefluid zu erwärmen, das in dem Getriebe umgewälzt wird.

Aufgabe der vorliegenden Erfindung ist es, ein Verfahren und ein Kraftfahrzeug zu schaffen, sodass ein besonders effizienter Betrieb des Kraftfahrzeugs realisiert werden kann.

Diese Aufgabe wird erfindungsgemäß durch ein Verfahren mit den Merkmalen des Patentanspruchs 1 gelöst.

Vorteilhafte Ausgestaltungen mit zweckmäßigen Weiterbildungen der Erfindung sind in den übrigen Ansprüchen angegeben.

Die Erfindung betrifft ein Verfahren zum Betreiben eines Antriebsstrangs eines Kraftfahrzeugs, insbesondere eines Kraftwagens wie beispielsweise eines Personenkraftwagens. Der Antriebsstrang weist wenigstens einen Antriebsmotor und wenigstens ein Getriebe auf, wobei das Kraftfahrzeug über das Getriebe von dem Antriebsmotor antreibbar ist. Dies bedeutet, dass das Getriebe von dem Antriebsmotor angetrieben werden kann. Darunter ist insbesondere zu verstehen, dass der Antriebsmotor, insbesondere über eine beispielsweise als Kurbelwelle ausgebildete Abtriebswelle des Antriebsmotors, wenigstens ein Drehmoment bereitstellen kann, welches in das Getriebe eingeleitet werden kann beziehungsweise eingeleitet wird. Das Getriebe bildet beispielsweise aus dem in das Getriebe eingeleiteten Drehmoment ein weiteres Drehmoment, wobei sich die Drehmomente beispielsweise hinsichtlich ihres Betrags und/oder hinsichtlich ihrer Wirkrichtung voneinander unterscheiden können. Das Getriebe kann das weitere Drehmoment bereitstellen, mittels welchem dann das Kraftfahrzeug, insbesondere wenigstens ein oder mehrere Räder des Kraftfahrzeugs, angetrieben werden kann.

Bei dem Verfahren wird Wärme von dem Antriebsmotor gezielt auf das Getriebe übertragen, wodurch das Getriebe gezielt erwärmt wird.

Um nun einen besonders effizienten und somit energieverbrauchsarmen, insbesondere kraftstoffverbrauchsarmen, Betrieb des Antriebsstrangs und somit des Kraftfahrzeugs realisieren zu können, ist es erfindungsgemäß vorgesehen, dass die Wärme in Abhängigkeit von prädiktiven Daten von dem Antriebsmotor gezielt auf das Getriebe übertragen wird. Die prädiktiven Daten charakterisieren zumindest einen zukünftigen Zustand des Kraftfahrzeugs. Unter dem Merkmal, dass die Wärme von dem Antriebsmotor gezielt auf das Getriebe übertragen wird, wodurch das Getriebe gezielt erwärmt wird, ist zu verstehen, dass der Antriebsstrang, beispielsweise mittels einer elektronischen Recheneinrichtung des Antriebsstrangs beziehungsweise des Kraftfahrzeugs, gezielt beziehungsweise gewünscht derart betrieben, insbesondere derart gesteuert und/oder geregelt, wird, dass es zu einer Erwärmung des Getriebes kommt, insbesondere dass es zu einer zumindest sehr kurzzeitigen Erwärmung des Antriebsmotors und einer daraus resultierenden und insbesondere unter sich an das Erwärmen des Antriebsmotors anschließender Kühlung des Antriebsmotors resultierenden Erwärmung des Getriebes kommt. Im Rahmen des erfindungsgemäßen Verfahrens beruht somit die gezielt durchgeführte und somit gewünschte Erwärmung des Getriebes nicht oder nicht nur auf willkürlichen und/oder zufälligen Wärmeübertragungen, sondern zumindest teilweise, insbesondere zumindest überwiegend oder vollständig, auf gezielten beziehungsweise gezielt herbeigeführten Vorgängen, insbesondere Steuer- und/oder Regelvorgängen, in deren Rahmen der Antriebsstrang, insbesondere mittels der elektronischen Recheneinrichtung, gezielt betrieben wird, um eine Erwärmung des Getriebes zu bewirken. Hierzu stellt beispielsweise die elektronische Recheneinrichtung Ansteuersignale, insbesondere elektrische Ansteuersignale, bereit, mittels welchen wenigstens ein oder mehrere Komponenten des Antriebsstrangs gezielt angesteuert und dadurch gezielt betrieben werden, um dadurch die gezielte Erwärmung des Getriebes zu bewirken. Eine der Komponenten ist beispielsweise der Antriebsmotor. Eine weitere der Komponenten kann beispielsweise das Getriebe sein.

Unter den prädiktiven Daten und darunter, dass die prädiktiven Daten zumindest einen zukünftigen Zustand charakterisieren, sowie unter dem zukünftigen Zustand kann insbesondere verstanden werden, dass beispielsweise das Verfahren zu einem ersten Zeitpunkt beziehungsweise während einer ersten Zeitspanne durchgeführt wird. Mit anderen Worten wird beispielsweise die Wärme von dem Antriebsmotor auf das Getriebe zu dem ersten Zeitpunkt beziehungsweise während der ersten Zeitspanne übertragen, um dadurch das Getriebe zu dem ersten Zeitpunkt beziehungsweise während der ersten Zeitspanne gezielt zu erwärmen. Zu dem ersten Zeitpunkt beziehungsweise während der ersten Zeitspanne befindet sich jedoch das Kraftfahrzeug beziehungsweise der Antriebsstrang noch nicht in dem zukünftigen Zustand, sondern Kraftfahrzeug weist den zukünftigen Zustand erst zu einem zeitlich auf den ersten Zeitpunkt folgenden zweiten Zeitpunkt beziehungsweise während einer zeitlich auf die erste Zeitspanne folgenden zweiten Zeitspanne mit einer Wahrscheinlichkeit auf. Mit anderen Worten ist der zukünftige Zustand ein bezogen auf das Erwärmen des Getriebes zukünftiger Zustand. Beispielsweise wird, insbesondere mittels der elektronischen Recheneinrichtung, zu einem weiteren Zeitpunkt beziehungsweise während einer weiteren Zeitspanne ermittelt, dass das Kraftfahrzeug den zukünftigen Zustand zu dem zweiten Zeitpunkt beziehungsweise während der zweiten Zeitspanne, insbesondere mit einer gewissen Wahrscheinlichkeit, aufweisen wird, wobei der zweite Zeitpunkt beziehungsweise die zweite Zeitspanne zeitlich auf den weiteren Zeitpunkt beziehungsweise auf die weitere Zeitspanne folgt. Dabei kann der weitere Zeitpunkt den ersten Zeitpunkt beziehungsweise die weitere Zeitspanne der ersten Zeitspanne entsprechen oder aber der erste Zeitpunkt folgt auf den weiteren Zeitpunkt beziehungsweise die weitere Zeitspanne folgt auf die erste Zeitspanne.

Vorzugsweise wird das erfindungsgemäße Verfahren während einer Fahrt durchgeführt und/oder während der Antriebsmotor aktiviert ist und/oder während das Kraftfahrzeug von dem Antriebsmotor angetrieben wird und/oder während das Getriebe von dem Antriebsmotor angetrieben wird. Unter dem Merkmal, dass der Antriebsmotor aktiviert ist, ist insbesondere zu verstehen, dass insbesondere dann, wenn der Antriebsmotor an einer Verbrennungskraftmaschine ausgebildet ist, in dem Antriebsmotor Verbrennungsvorgänge ablaufen beziehungsweise dass der Antriebsmotor, insbesondere über seine Abtriebswelle, Drehmomente bereitstellt.

Der Antriebsmotor kann als elektrische Maschine oder aber als Verbrennungskraftmaschine, insbesondere als Hubkolben-Verbrennungskraftmaschine, ausgebildet sein.

Mittels des erfindungsgemäßen Verfahrens ist es möglich, dass das Getriebe beispielsweise zu einem Abstellzeitpunkt, zu welchem der Antriebsmotor beziehungsweise das Kraftfahrzeug insgesamt abgestellt und dabei beispielsweise geparkt wird, eine besonders vorteilhafte, insbesondere eine besonders hohe, Temperatur aufweist. Folgt auf den Abstellzeitpunkt ein Startzeitpunkt, zu welchem das Kraftfahrzeug beziehungsweise der Antriebsmotor wieder gestartet wird, so weist das Kraftfahrzeug beziehungsweise der Antriebsstrang zu dem Startzeitpunkt eine besonders vorteilhafte, insbesondere eine besonders hohe, Temperatur auf, sodass die innere Reibung des Antriebsstrangs zu dem Startzeitpunkt und während eines sich an den Startzeitpunkt anschließenden Betriebs besonders gering gehalten werden kann. In der Folge kann ein besonders energieverbrauchsarmer Betrieb gewährleistet werden. Hierzu wird beispielsweise ohnehin vorhandene, von dem Antriebsmotor während einer dem Abstellzeitpunkt vorausgehenden Zeitdauer bereitgestellte Abwärme als die Wärme genutzt, die gezielt von dem Antriebsmotor auf das Getriebe übertragen wird. Mit anderen Worten kann im Rahmen des erfindungsgemäßen Verfahrens Abwärme genutzt werden, die herkömmlicherweise ungenutzt verloren geht, um zu dem Startzeitpunkt besonders vorteilhafte Bedingungen, die für einen effizienten Betrieb günstig sind, bereitzustellen.

Durch Berücksichtigung der prädiktiven Daten kann die gezielte Erwärmung des Getriebes bereits dann durchgeführt und/oder bereits dann zumindest vorbereitet werden, wenn das Kraftfahrzeug den zukünftigen und beispielsweise für die gezielte Erwärmung des Getriebes besonders vorteilhaften Zustand noch gar nicht tatsächlich aufweist. Kommt dann das Kraftfahrzeug tatsächlich in den zukünftigen Zustand, so kann dann das Getriebe besonders effizient erwärmt werden.

Im Rahmen des erfindungsgemäßen Verfahrens wird das beispielsweise als Wechselgetriebe, als manuelles Schaltgetriebe, als automatisiertes Schaltgetriebe, als Doppelkupplungsgetriebe, als eine einen hydrodynamischen Drehmomentwandler aufweisendes und als Wandlergetriebe bezeichnetes Automatikgetriebe und/oder als Anlassgetriebe ausgebildete Getriebe als Wärmespeicher genutzt, um beispielsweise während eines zwischen dem Abstellzeitpunkt und dem Startzeitpunkt liegenden Zeitintervalls, während ein Aktivieren des Kraftfahrzeugs beziehungsweise des Antriebsmotors unterbleibt, Wärme, die herkömmlicherweise ungenutzt verloren geht, zu speichern. Diese gespeicherte Wärme kann dann dazu genutzt werden beziehungsweise führt dazu, dass der Antriebsstrang zum Startzeitpunkt eine vorteilhafte Temperatur aufweist.

Insbesondere ist es im Rahmen des erfindungsgemäßen Verfahrens vorgesehen, dass das Getriebe zumindest teilweise parallel beziehungsweise gleichzeitig mit dem Antriebsmotor unter Berücksichtigung der prädiktiven Daten erwärmt wird, sodass beispielsweise eine auch als Motor- oder Aggregatetemperatur bezeichnete erste Temperatur zumindest teilweise zeitgleich beziehungsweise parallel mit einer auch als Getriebetemperatur bezeichneten zweiten Temperatur des Getriebes angehoben wird. Der Antriebsmotor wird auch als Aggregat bezeichnet. Die Erfindung macht es sich dabei zunutze, dass das Getriebe und das Aggregat thermisch über wenigstens einen von einem beispielsweise als Fluid ausgebildeten Medium durchströmbaren und beispielsweise als Kühlkreislauf ausgebildeten Kreislauf sowie mechanisch miteinander gekoppelt sind. Insbesondere über die thermische Kopplung kann Wärme gezielt von dem Antriebsmotor auf das Getriebe übertragen werden, um dadurch das Getriebe gezielt zu erwärmen. Ist beispielsweise die Getriebetemperatur zum Abstellzeitpunkt auf einem höheren Niveau als die Aggregatetemperatur, wird nach dem Abstellzeitpunkt keine oder nur eine geringe Wärmemenge von dem Antriebsmotor auf das Getriebe übertragen. In der Folge kann ein besonders hoher Restwärmeerhalt realisiert werden, sodass das Getriebe zum Startzeitpunkt und somit zu einem Zeitpunkt eines Wiederstarts des Kraftfahrzeugs besonders hoch ist. Dadurch können die innere Reibung und somit Verluste in einem besonders geringen Rahmen gehalten werden. Um dabei den Energieverbrauch besonders gering halten zu können, ist zumindest ein Teil, insbesondere zumindest ein überwiegender Teil, der oder die vollständige Wärme, die von dem Antriebsmotor auf das Getriebe übertragen wird, um dadurch das Getriebe gezielt zu erwärmen, von dem Antriebsmotor ohnehin bereitgestellte Wärme, insbesondere Abwärme, die herkömmlicherweise ungenutzt verloren geht. Erfindungsgemäß wird die Abwärme jedoch genutzt, um das Getriebe zu erwärmen.

Erfindungsgemäß wird die Wärme auch in Abhängigkeit von wenigstens einem, in einer Speichereinrichtung der elektronische Recheneinrichtung gespeicherten, Wirkungsgradwert gezielt von dem Antriebsmotor auf das Getriebe übertragen, wobei der Wirkungsgradwert einen Wirkungsgrad oder eine Verlustleistung des Getriebes charakterisiert. Hierdurch kann das Getriebe besonders effizient erwärmt werden.

In weiterer Ausgestaltung der Erfindung wird die Wärme auch in Abhängigkeit von wenigstens einem, insbesondere in der Speichereinrichtung der elektronischen Recheneinrichtung gespeicherten, Grenzwert gezielt von dem Antriebsmotor auf das Getriebe übertragen, wobei der Grenzwert eine maximal zulässige Temperatur des Getriebes charakterisiert. Hierdurch können übermäßig hohe Temperaturen des Getriebes vermieden werden, und es kann eine besonders hohe Wärmemenge von dem Getriebe auf den Antriebsmotor übertragen werden. In der Folge kann ein besonders effizienter Betrieb gewährleistet werden.

Eine weitere Ausführungsform zeichnet sich dadurch aus, dass die prädiktiven Daten wenigstens eine zukünftige Fahrgeschwindigkeit des Kraftfahrzeugs und/oder wenigstens eine zukünftige Last des Antriebsmotors und/oder wenigstens eine zukünftige Drehzahl des Antriebsmotors und/oder wenigstens eine zukünftige Temperatur des Antriebsmotors und/oder wenigstens eine zukünftige Temperatur des Getriebes und/oder einen Verlauf einer dem Kraftfahrzeug vorausliegenden und beispielsweise von dem Kraftfahrzeug in Zukunft zu befahrenden Fahrstrecke und/oder eine zukünftig für das Kraftfahrzeug geltende Geschwindigkeitsbegrenzung und/oder einen zukünftigen Abschaltzeitpunkt des Antriebsmotors und/oder einen Zielort, den Kraftfahrzeug in Zukunft erreichen wird, und/oder eine vorübergehende Abschaltphase des Antriebsmotors charakterisieren. Hierdurch kann der zukünftige Zustand mit einer hohen Wahrscheinlichkeit sehr präzise berechnet werden, sodass das Getriebe besonders vorteilhaft erwärmt werden kann.

In weiterer Ausgestaltung der Erfindung wird zumindest ein Teil der prädiktiven Daten anhand von Daten bestimmt, die das Kraftfahrzeug von wenigstens einer bezüglich des Kraftfahrzeugs externen und auch als Server oder Backend bezeichneten elektronischen Recheneinrichtung kabellos, insbesondere über das Internet, empfängt. Dadurch kann der zukünftige Zustand besonders präzise ermittelt werden, sodass das Getriebe besonders vorteilhaft erwärmt werden kann.

Alternativ oder zusätzlich wird zumindest ein Teil der prädiktiven Daten anhand von Daten bestimmt, die in der Speichereinrichtung der elektronischen Recheneinrichtung des Kraftfahrzeugs gespeichert sind. Die in der Speichereinrichtung gespeicherten Daten sind beispielsweise Lerndaten, die aufgrund von in der Vergangenheit liegenden Fahrsituationen und/oder Fahrzuständen und/oder Nutzungen des Kraftfahrzeugs ermittelt wurden und somit beispielsweise eine Nutzungshistorie des Kraftfahrzeugs charakterisieren, anhand der Lerndaten kann wenigstens eine in der Vergangenheit bereits aufgetretene und nun wiederkehrende Fahrsituation erkannt werden, sodass auf den zukünftigen Zustand besonders präzise rückgeschlossen werden kann.

Um das Getriebe besonders vorteilhaft erwärmen zu können, ist es in weiterer Ausgestaltung der Erfindung vorgesehen, dass das gezielte Übertragen der Wärme von dem Antriebsmotor auf das Getriebe umfasst, dass die Wärme von dem Antriebsmotor auf wenigstens ein erstes Medium zum Kühlen des Antriebsmotors, von dem ersten Medium über wenigstens einen Wärmetauscher auf wenigstens ein zweites Medium und von dem zweiten Medium auf das Getriebe, insbesondere gezielt, übertragen wird. Das jeweilige Medium ist vorzugsweise als ein Fluid, insbesondere eine Flüssigkeit, ausgebildet. Beispielsweise strömt das jeweilige Medium durch einen jeweiligen Kreislauf, wobei die Kreisläufe über den wenigstens einen Wärmetauscher thermisch und somit wärmeübertragend miteinander gekoppelt sind.

Dabei hat es sich als besonders vorteilhaft gezeigt, wenn das gezielte Übertragen der Wärme von dem Antriebsmotor auf das Getriebe umfasst, dass eine Temperatur des ersten Mediums gezielt erhöht wird. Hierdurch wird beispielsweise, insbesondere mittels der elektronischen Recheneinrichtung, gezielt ein Betriebszustand des Antriebsmotors eingestellt, wodurch es zu einer Erhöhung der Temperatur des ersten Mediums kommt. Dies erfolgt beispielsweise durch Ansteuern, insbesondere Steuern und/oder Regeln, des Antriebsmotors durch die Recheneinrichtung. Dadurch kann das erste Medium besonders effektiv und effizient erwärmt werden.

Eine weitere Ausführungsform zeichnet sich dadurch aus, dass das gezielte Übertragen der Wärme von dem Antriebsmotor auf das Getriebe umfasst, dass wenigstens eine Strömung des ersten Mediums und/oder des zweiten Mediums durch den Wärmetauscher hindurch gezielt eingestellt wird. dadurch kann das Getriebe besonders gezielt und somit effektiv und effizient erwärmt werden. Beispielsweise wird die Strömung des ersten Mediums und/oder die Strömung des zweiten Mediums mittels einer Ventileinrichtung eingestellt. Bei der Strömung handelt es sich beispielsweise um einen Massen- und/oder Volumenstrom.

Eine Ausführung die ein Kraftfahrzeug betrifft, welches zum Durchführen des erfindungsgemäßen Verfahrens ausgebildet ist, wird hier beschrieben. Diese Ausführung ist nicht Teil der Erfindung. Das Kraftfahrzeug weist eine elektronische Recheneinrichtung, wenigstens einen Antriebsmotor und wenigstens ein Getriebe auf. Über das Getriebe ist das Kraftfahrzeug von dem Antriebsmotor antreibbar. Dabei umfasst das Kraftfahrzeug einen Antriebsstrang, welcher den Antriebsmotor, das Getriebe und die elektronische Recheneinrichtung umfasst. Die Recheneinrichtung ist dabei dazu ausgebildet, eine gezielte Übertragung von Wärme von dem Antriebsmotor auf das Getriebe und dadurch eine gezielte Erwärmung des Getriebes zu bewirken.

Um nun einen besonders effizienten und somit verlustarmen beziehungsweise wirkungsgradgünstigen Betrieb des Antriebsstrangs und somit des Kraftfahrzeugs insgesamt realisieren zu können, ist es erfindungsgemäß vorgesehen, dass die Recheneinrichtung dazu ausgebildet ist, die Wärme in Abhängigkeit von prädiktiven Daten, welche zumindest einen zukünftigen Zustand des Kraftfahrzeugs charakterisieren, von dem Antriebsmotor gezielt auf das Getriebe zu übertragen beziehungsweise die gezielte Übertragung der Wärme von dem Antriebsmotor auf das Getriebe in Abhängigkeit von prädiktiven Daten zu bewirken. Dabei empfängt und/oder ermittelt die Recheneinrichtung beispielsweise die prädiktiven Daten, insbesondere aus Daten, die in einer Speichereinrichtung der elektronischen Recheneinrichtung gespeichert sind und/oder aus Daten, die die elektronische Recheneinrichtung von wenigstens einer bezüglich des Kraftfahrzeugs externen elektronischen Recheneinrichtung, insbesondere über das Internet und/oder kabellos, empfängt.

Im Folgenden ist ein Ausführungsbeispiel der Erfindung beschrieben. Hierzu zeigt:

Fig. 1 eine schematische Darstellung eines Antriebsstrangs eines erfindungsgemäßen Kraftfahrzeugs, wobei der Antriebsstrang zum Durchführen eines erfindungsgemäßen Verfahrens ausgebildet ist; und

Fig. 2 Diagramme zum Veranschaulichen des Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsform umfassen. Des Weiteren ist die beschriebene Ausführungsform auch durch weitere der bereits beschriebenen Merkmale der Erfindung ergänzbar.

In den Figuren bezeichnen gleiche Bezugszeichen jeweils funktionsgleiche Elemente.

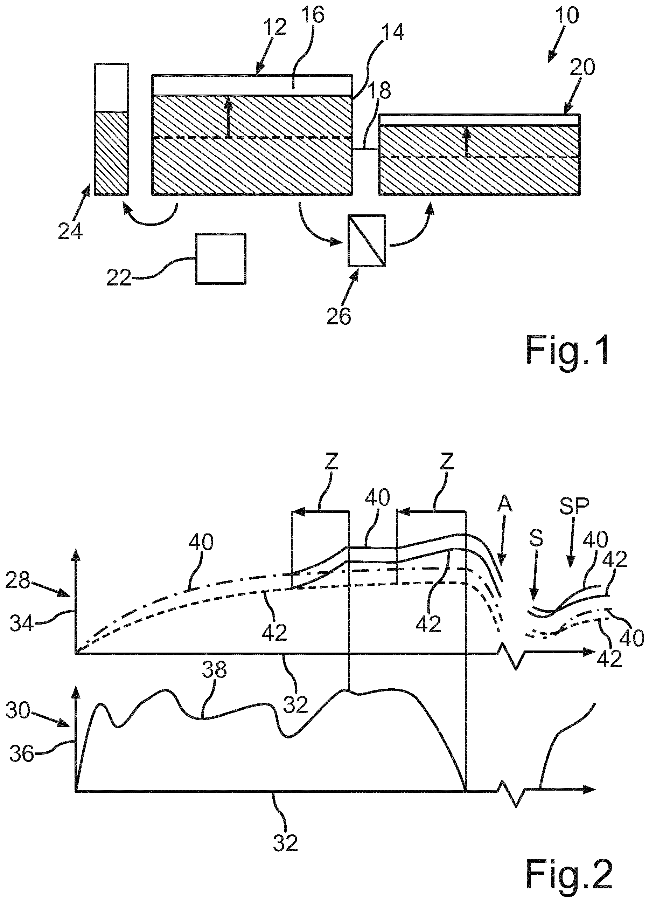

Fig. 1 zeigt in einer schematischen Darstellung einen Antriebsstrang 10 eines Kraftfahrzeugs, insbesondere eines Kraftwagens wie beispielsweise eines Personenkraftwagens. Im Folgenden wird anhand von Fig. 1 und 2 ein Verfahren zum Betreiben des Antriebsstrangs 10 beschrieben. Der Antriebsstrang 10 weist wenigstens einen Antriebsmotor 12 auf, welcher beispielsweise als Verbrennungskraftmaschine ausgebildet ist. Der Antriebsmotor 12 umfasst beispielsweise ein erstes Gehäuseelement 14 und ein zweites Gehäuseelement 16, wobei die Gehäuseelemente 14 und 16 separat voneinander ausgebildet und miteinander verbunden sein können. Das Gehäuseelement 14 ist beispielsweise ein Kurbelgehäuse, insbesondere ein Zylinderkurbelgehäuse, wobei das Gehäuseelement 16 beispielsweise ein Zylinderkopf ist. Das Gehäuseelement 14 bildet beispielsweise wenigstens einen oder mehrere Brennräume, welche als Zylinder ausgebildet sein können. Während eines befeuerten Betriebs der Verbrennungskraftmaschine laufen in dem jeweiligen Brennraum Verbrennungsvorgänge ab. Das vorgenannte Verfahren wird dabei beispielsweise während einer Fahrt des Kraftfahrzeugs und/oder während des befeuerten Betriebs durchgeführt.

Der Antriebsmotor 12, insbesondere das Gehäuseelement 14 und/oder das Gehäuseelement 16, ist in einem ersten Kreislauf angeordnet, welches von einem ersten Medium durchströmbar ist. Der erste Kreislauf ist beispielsweise ein Kühlkreislauf, wobei das erste Medium beispielsweise ein Kühlmedium ist. Das erste Medium ist vorzugsweise ein Fluid, insbesondere eine Flüssigkeit. Insbesondere kann die Flüssigkeit als Wasser ausgebildet sein oder zumindest Wasser aufweisen, sodass das Kühlmedium beispielsweise Kühlwasser sein kann. Mittels des ersten Mediums kann zumindest ein Teil der Verbrennungskraftmaschine beziehungsweise des Antriebsmotors 12 gekühlt werden, indem beispielsweise ein Wärmeübergang von dem Antriebsmotor 12 an das erste Medium erfolgt. Hierdurch wird der Antriebsmotor 12 gekühlt, und das erste Medium wird erwärmt. Dabei veranschaulichen in Fig. 1 Pfeile einen jeweiligen Wärmeübergang beziehungsweise eine jeweilige Wärmeübertragung. Insbesondere ist es denkbar, dass Wärme von dem Gehäuseelement 14 an das Gehäuseelement 16 übergeht.

Der Antriebsmotor 12 weist eine beispielsweise als Kurbelwelle ausgebildete Abtriebswelle 18 auf, über welche der Antriebsmotor 12 wenigstens ein Drehmoment, insbesondere zum Antreiben des Kraftfahrzeugs, bereitstellen kann beziehungsweise während des Verfahrens bereitstellt.

Der Antriebsstrang 10 umfasst darüber hinaus wenigstens ein Getriebe 20, welches, insbesondere mit der Abtriebswelle 18, mit dem Antriebsmotor 12 koppelbar oder gekoppelt ist. Dadurch kann das von dem Antriebsmotor 12 bereitgestellte Drehmoment in das Getriebe 20 eingeleitet werden, wodurch das Getriebe 20 antreibbar ist beziehungsweise angetrieben wird. Dabei ist das Kraftfahrzeug über das Getriebe 20 von dem Antriebsmotor 12 antreibbar beziehungsweise das Kraftfahrzeug wird beispielsweise während des Verfahrens über das Getriebe 20 von dem Antriebsmotor 12 angetrieben.

Wie im Folgenden noch genauer erläutert wird, wird bei dem Verfahren Wärme von dem Antriebsmotor 12 gezielt auf das Getriebe 20 übertragen, wodurch das Getriebe gezielt erwärmt wird.

Das Getriebe 20 ist beispielsweise in einem zweiten Kreislauf angeordnet, welcher von einem zweiten Medium durchströmbar ist. Das zweite Medium ist beispielsweise eine Flüssigkeit. Insbesondere kann das zweite Medium ein Öl sein, welches auch als Getriebeöl bezeichnet wird. Dabei kann ein Wärmeaustausch zwischen dem Getriebe 20 und in dem zweiten Medium erfolgen. In einem ersten Betriebszustand erfolgt beispielsweise ein solcher Wärmeaustausch zwischen dem Getriebe 20 und dem zweiten Medium, dass Wärme von dem Getriebe 20 an das zweite Medium übergeht. Hierdurch wird das Getriebe 20 gekühlt, und das zweite Medium wird erwärmt. In einem zweiten Betriebszustand kann ein solcher Wärmeaustausch zwischen dem Getriebe 20 und dem zweiten Medium erfolgen, dass Wärme von dem zweiten Medium an das Getriebe 20 übergeht. Hierdurch wird das Getriebe 20 erwärmt, und das zweite Medium wird gekühlt.

Der Antriebsstrang 10 umfasst auch wenigstens ein in Fig. 1 besonders schematisch dargestellte elektronische Recheneinrichtung 22, welche auch als Steuergerät bezeichnet wird. Dabei wird das Verfahren mittels der elektronischen Recheneinrichtung 22 durchgeführt.

Um nun einen besonders effizienten und somit energieverbrauchsarmen Betrieb des Antriebsstrangs 10 und somit des Kraftfahrzeugs insgesamt realisieren zu können, wird die Wärme in Abhängigkeit von prädiktiven Daten, welche zumindest einen zukünftigen Zustand des Kraftfahrzeugs, insbesondere des Antriebsstrangs 10, charakterisieren, von dem Antriebsmotor 12 auf das Getriebe 20 übertragen, insbesondere über die Medien. Mit anderen Worten wird beispielsweise mittels der elektronischen Recheneinrichtung 22 die gezielte Übertragung der Wärme von dem Antriebsmotor 12 auf das Getriebe 20 in Abhängigkeit von prädiktiven Daten bewirkt, welche zumindest einen zukünftigen Zustand des Kraftfahrzeugs, insbesondere des Antriebsstrangs 10, charakterisieren.

In dem ersten Kreislauf ist ein auch als Kühler 24 bezeichneter Wärmetauscher angeordnet, welcher von dem ersten Medium durchströmbar ist. Der Kühler 24 ist beispielsweise von Luft, insbesondere von Umgebungsluft, umströmbar. Insbesondere dann, wenn das erste Medium als eine Flüssigkeit ausgebildet ist, ist der Kühler 24 beispielsweise als ein Flüssigkeits-/Luft-Wärmetauscher ausgebildet, da über den Kühler 24 ein Wärmeaustausch zwischen der Luft und dem ersten Medium erfolgen kann. Insbesondere erfolgt über den Kühler 24 ein Wärmeübergang von dem ersten Medium an die Luft, wodurch das erste Medium gekühlt wird. In der Folge kann der Antriebsmotor 12 effektiv gekühlt werden.

Der Antriebsstrang 10 weist darüber hinaus einen auch als Getriebewärmetauscher bezeichneten Wärmetauscher 26 auf, welcher beispielsweise sowohl in dem ersten Kreislauf als auch in dem zweiten Kreislauf angeordnet ist. Dadurch ist der Wärmetauscher 26 sowohl von dem ersten Medium als auch von dem zweiten Medium durchströmbar. Insbesondere wird der Wärmetauscher 26 während des Verfahrens und dabei insbesondere während des zweiten Betriebszustands sowie gegebenenfalls auch während des ersten Betriebszustands sowohl von dem ersten Medium als auch von dem zweiten Medium durchströmt. Über den Wärmetauscher 26 kann ein Wärmeaustausch zwischen den Medien erfolgen. Da beispielsweise beide Medien als Flüssigkeiten ausgebildet sind, ist der Wärmetauscher 26 beispielsweise als Flüssigkeits-/Flüssigkeits-Wärmetauscher ausgebildet. Während des Verfahrens erfolgt ein solcher Wärmeaustausch zwischen den Medien über den Wärmetauscher 26, dass Wärme von dem ersten Medium über den Wärmetauscher 26 an das zweite Medium übergeht. Dadurch wird das erste Medium gekühlt, und das zweite Medium wird erwärmt. In der Folge kann Wärme von dem erwärmten zweiten Medium an das Getriebe 20 übergehen, wodurch das Getriebe 20 erwärmt wird. Dabei kann beispielsweise mittels der elektronischen Recheneinrichtung 22 der zweite Betriebszustand, in welchem Wärme von dem Antriebsmotor 20 an das erste Medium, von dem ersten Medium über den Wärmetauscher 26 an das zweite Medium und von dem zweiten Medium an das Getriebe 20 übergeht, gezielt und somit gewünscht eingestellt werden, insbesondere durch entsprechendes Ansteuern wenigstens einer Komponente des Antriebsstrangs 10. Dadurch kann das Getriebe 20 gezielt erwärmt werden.

Fig. 2 zeigt Diagramme 28 und 30, auf deren jeweiliger Abszisse 32 die Zeit aufgetragen ist. Auf der Ordinate 34 des Diagramms 28 ist eine Temperatur aufgetragen, und auf der Ordinate 36 des Diagramms 30 ist eine Fahrgeschwindigkeit des Kraftfahrzeugs aufgetragen. Somit veranschaulicht ein Verlauf 38 die Fahrgeschwindigkeit des Kraftfahrzeugs über der Zeit. Ein Verlauf 40 veranschaulicht eine Temperatur des ersten Mediums über der Zeit, und ein Verlauf 42 veranschaulicht eine Temperatur des Getriebeöls über der Zeit. Strichpunktiert dargestellte Teile des Verlaufs 40 veranschaulichen beispielsweise die Temperatur des ersten Mediums, wenn das Verfahren nicht durchgeführt wird. Mit durchgezogenen Linien dargestellte Teile des Verlaufs 40 veranschaulichen die Temperatur des ersten Mediums, wenn das Verfahren durchgeführt wird. Dementsprechend veranschaulichen gestrichelte Teile des Verlaufs 42 die Temperatur des Getriebeöls, wenn das Verfahren nicht durchgeführt wird, und mit durchgezogenen Linien dargestellte Teile des Verlaufs 42 veranschaulichen die Temperatur des Getriebeöls, wenn das Verfahren durchgeführt wird.

In Fig. 2 sind zukünftige Ereigniserkennungen und somit zukünftige Zustände des Kraftfahrzeugs mit Z bezeichnet, wobei - wie aus Fig. 2 erkennbar ist - in Abhängigkeit von den zukünftigen Ereigniserkennungen Z die jeweiligen Temperaturen gezielt angehoben werden. In der Folge wird das Getriebe 20 gezielt erwärmt. Dadurch weist das Getriebe 20 beispielsweise zu einem Startzeitpunkt S und einer sich daran anschließenden Startphase SP eine besonders hohe, auch als Wiederstart-Temperatur bezeichnete Temperatur auf, sodass der Antriebsstrang 10 insgesamt eine vorteilhafte Wiederstart-Temperatur zu dem Startzeitpunkt S und während der Startphase SP aufweist. In der Folge können die innere Reibung und somit Verluste des Antriebsstrangs 10 besonders gering gehalten werden. Dabei schließen sich der Startzeitpunkt S und die Startphase SP beispielsweise an ein Zeitintervall an, welches zwischen dem Startzeitpunkt S und einem Abstellzeitpunkt A liegt. Zu dem Abstellzeitpunkt A werden der Antriebsmotor 12 und der Antriebsstrang 10 und somit das Kraftfahrzeug insgesamt deaktiviert, wobei während des Zeitintervalls ein Aktivieren des Kraftfahrzeugs unterbleibt.

Insgesamt ist erkennbar, dass mittels des Verfahrens eine besonders hohe Menge an Wärme in dem Getriebe 20 gespeichert werden kann, indem das Getriebe 20 gezielt erwärmt wird. Das Getriebe 20 wird somit als Wärmespeicher genutzt, um zum Startzeitpunkt S eine vorteilhaft hohe Temperatur des Antriebsstrangs 10 gewährleisten zu können. Durch das gezielte Erwärmen des Getriebes 20 wird Wärme, welche herkömmlicherweise ungenutzt verloren geht, in dem Getriebe 20 zwischengespeichert. Dabei wird die thermische Masse des Getriebes 20 genutzt, indem das Getriebe 20 über den Getriebeölwärmetauscher geheizt wird. Hierdurch wird Enthalpie des Antriebsmotors 12 in dem Getriebe gespeichert. Die zusätzliche gespeicherte Enthalpie wird während des auch als Abstellzeit bezeichneten Zeitintervalls gespeichert, um eine besonders hohe Wiederstart-Temperatur gewährleisten zu können. Insbesondere wird das Getriebe 20 parallel zu dem einfach auch als Motor bezeichneten Antriebsmotor 12 erwärmt. Ferner ist es denkbar, dass mehrere Getriebeölwärmetauscher vorgesehen sind, über die das Getriebe 20 gezielt erwärmt werden kann. Das auf die beschriebene Weise erwärmte Getriebeöl kann das Getriebe 20 beispielsweise derart erwärmen, dass ein Wärmeübergang von dem Getriebeöl an Bauteile des Getriebes 20 erfolgt. Die zusätzliche, nun in dem Getriebe 20 gespeicherte Enthalpie des Getriebes 20 bewirkt, dass der Motor und das Getriebe 20 während des Zeitintervalls deutlich langsamer auskühlen als bei herkömmlichen Antriebssträngen. Mit anderen Worten weisen der Motor und das Getriebe bei einem fest definierten Wiederstartzeitpunkt (Startzeitpunkt S) eine höhere Wiederstart-Temperatur als bei herkömmlichen Antriebssträngen auf. Der Motor und das Getriebe 20 sind Baugruppen, welche als thermische Akkus oder Batterien genutzt werden.

Vorzugsweise wird das Getriebe 20 nicht nur unter Berücksichtigung der prädiktiven Daten sondern auch unter Kenntnis der Getriebeverlustleistung gezielt erwärmt. Vorzugsweise werden auch das thermische Reibleistungsverhalten des Motors sowie die Kühlmitteltemperatur miteinbezogen. Diese Idee könnte auch bezüglich einer Optimierung von Lüfternachlaufzeiten des Motors angewendet werden. Durch Kenntnis beziehungsweise Abschätzung der Verlustleistung oder des Wirkungsgrads des Getriebes 20 lässt sich die Temperaturänderung des Getriebes 20 unter Zuhilfenahme der Getriebemasse und der Wärmekapazität berechnen. Die thermische Arbeit Q ergibt sich zu:

$$Q = M \times cp \times \delta T$$

Dabei bezeichnet M die Masse des Getriebes, cp die Wärmekapazität des Getriebes 20 beziehungsweise dessen Bauteile, $\delta$T die Temperaturänderung. Die thermische Arbeit Q ergibt sich ferner zu:

$$Q = P \times t$$

Dabei bezeichnet P die Verlustleistung und t die Zeit. Daraus ergibt sich:

$$M \times cp \times \delta T = P \times = t/P = Reibmoment \times Drehzahl \times 2 \times \pi /60$$

Die Verlustleistung oder das Reibmoment über der Temperatur aufgetragen ist eine bekannte Größe, die als Kennfeld in einem Algorithmus in der auch als Steuergerät bezeichneten elektronischen Recheneinrichtung 22, insbesondere deren Speichereinrichtung, abgelegt und somit gespeichert werden kann. Ebenso existieren Reibleistungskennfelder von Antriebsaggregaten und deren Abhängigkeit von der Temperatur.

Verknüpft man diese Kenntnis mit der Zuhilfenahme von prädiktiven Daten, insbesondere Streckendaten, so lässt sich durch die prädiktiven Streckendaten vorausberechnen, welche mittlere Drehzahl beziehungsweise Fahrgeschwindigkeit sich einstellen wird und somit auch welche Verlustleistung vorherrschen wird und welche Temperaturänderung ($\delta$T) sich daraus ergibt. Da Verlustleistungen im Getriebe 20 stark temperaturabhängig sind, unter anderem durch die Viskosität des Getriebeöls, kann gezielt durch Kenntnis der prädiktiven Daten die Effizienz des Kraftfahrzeugs gesteigert und auch gesteuert beziehungsweise geregelt werden.

Durch Kenntnis der Fahrstrecke, anzunehmenden Geschwindigkeit (Stadt, Landstraße, Autobahn) und des zu erwartenden Abschaltzeitpunkts des Kraftfahrzeugs (Parkzeiten) wie der Dauer der zu erwartenden Standphase (Parkzeit) zum Beispiel durch immer wiederkehrende Ereignisse wie zum Beispiel tägliche Fahrt in die Arbeit mit entsprechender Fahrtunterbrechung, kann gezielt durch einen Algorithmus abgewogen werden, wann und welcher Energieinhalt an thermischer Energie aus dem ersten Kreislauf des Motors entnommen und an das Getriebe 20 übertragen wird, um das Kraftfahrzeug in seiner Gesamteffizienz optimal zu betreiben. Dieser thermische Energietransfer kann über den Getriebeölwärmetauscher erfolgen, welcher beispielsweise ohnehin zum Einsatz kommt. Es kann also in Abhängigkeit von der Fahrtzeit und/oder der mittleren Fahrgeschwindigkeit und in Abhängigkeit von einer prognostizierten Abstellzeit errechnet werden, ob oder wann es sinnvoll ist, thermische Energie von dem Motor an das Getriebe 20 zu übertragen.

Darüber hinaus kann eine bedarfsgerechte Absenkung der Getriebetemperatur bei entsprechenden bevorstehenden Hoch-Lastfällen erfolgen. Bei entsprechenden Lastfällen wie beispielsweise einer Autobahnfahrt, einer starken Beschleunigung, einer Bergfahrt mit Anhänger wie durch die bestehenden inneren lastabhängigen Verluste dem Getriebe 20 zusätzlich Wärme in Form von Verlustleistung zugeführt. Dies führt zu einer Temperaturzunahme im Getriebe 20. Für die Temperaturkollektiverfüllung des Getriebeöls ist es erforderlich, unter einer bestimmten und auch als Grenze oder Grenzwert bezeichneten Temperaturgrenze zu bleiben. Dies sind beispielsweise 100 Grad Celsius im Hinblick auf die Temperatur des Getriebeöls. Nähert sich beispielsweise die Getriebetemperatur dieser Grenze, wird versucht, über den Getriebeölkühler das Getriebe 20 mittels des ersten Mediums zu kühlen. Nach Unterschreiten der auch als Temperaturschwelle bezeichneten Grenze und entsprechender Hysterese wird der Kühlbedarf über den Getriebeölkühler entsprechend reduziert. Dies kann durch Anheben der Temperatur des ersten Mediums und/oder durch Veränderung des Kühlmittelvolumenstroms am Getriebeölkühler (Schaltventil) geschehen.

Durch Errechnen der Standzeit (Parkzeit beziehungsweise Wahrscheinlichkeit der Parkzeit aus erlerntem Nutzerverhalten) ist es ebenso sinnvoll, die Getriebetemperatur vor Abstellen des Kraftfahrzeugs gezielt deutlich zu erhöhen, um die dadurch gespeicherte Enthalpie zu nutzen. Über die Standzeit hinweg wird somit eine erhöhte Wiederstart-Temperatur vom Getriebe 20 und angeflanschtem Motor erreicht. Dies führt wiederum zu einer geringeren Reibleistung von Getriebe 20 und Motor.

Beispielsweise wird ab einer bestimmten Kühlmitteltemperatur des Motors ein Getriebeölheizen freigegeben. Das Getriebeöl wird dann solange beheizt beziehungsweise erwärmt, bis sich eine auch als Wohlfühltemperatur bezeichnete, besonders vorteilhafte Temperatur des zweiten Mediums und/oder im Getriebe 20 einstellt, oder ein Kühlen des Getriebes 20 aufgrund eines vorherrschenden Temperaturniveaus vorliegt. Demgegenüber vorteilhafter ist es jedoch, anhand der prädiktiven Daten vorausschauend zu agieren und anhand der prädiktiven Daten ein energetisches thermisches Optimum als Strategie, gemäß welcher beispielsweise der Antriebsstrang 10 betrieben wird, zu errechnen.

**Patentansprüche**

1. Verfahren zum Betreiben eines wenigstens einen Antriebsmotor (12) und wenigstens ein Getriebe (20) aufweisenden Antriebsstrangs (10) eines über das Getriebe (20) von dem Antriebsmotor (12) antreibbaren Kraftfahrzeugs, bei welchem Wärme von dem Antriebsmotor (12) gezielt auf das Getriebe (20) übertragen wird, wodurch das Getriebe (20) gezielt erwärmt wird,

   wobei die Wärme in Abhängigkeit von prädiktiven Daten, welche zumindest einen zukünftigen Zustand des Kraftfahrzeugs charakterisieren, von dem Antriebsmotor (12) gezielt auf das Getriebe (20) übertragen wird,
   **dadurch gekennzeichnet, dass**
   die Wärme auch in Abhängigkeit von wenigstens einem in einer Speichereinrichtung einer elektronischen Recheneinrichtung (22) des Antriebsstrangs (10) gespeicherten Wirkungsgradwert, welcher einen Wirkungsgrad oder eine Verlustleistung des Getriebes (20) charakterisiert, gezielt von dem Antriebsmotor (12) auf das Getriebe (20) übertragen wird.

2. Verfahren nach Anspruch 1,
   **dadurch gekennzeichnet, dass**
   die Wärme auch in Abhängigkeit von wenigstens einem Grenzwert, welcher eine maximal zulässige Temperatur des Getriebes (20) charakterisiert, gezielt von dem Antriebsmotor (12) auf das Getriebe (20) übertragen wird.

3. Verfahren nach einem der vorhergehenden Ansprüche,
   **dadurch gekennzeichnet, dass**
   das gezielte Übertragen der Wärme von dem Antriebsmotor (12) auf das Getriebe (20) umfasst, dass die Wärme von dem Antriebsmotor (12) auf wenigstens ein erstes Medium zum Kühlen des Antriebsmotors (12), von dem ersten Medium über wenigstens einen Wärmetauscher (26) auf wenigstens ein zweites Medium und von dem zweiten Medium auf das Getriebe (20) übertragen wird.

**4.** Verfahren nach Anspruch 3,
**dadurch gekennzeichnet, dass**
das gezielte Übertragen der Wärme von dem Antriebsmotor (12) auf das Getriebe (20) umfasst, dass eine Temperatur des ersten Mediums gezielt erhöht wird.

**5.** Verfahren nach Anspruch 4,
**dadurch gekennzeichnet, dass**
das gezielte Erhöhen der Temperatur des ersten Mediums umfasst, dass der Antriebsmotor (12) gezielt betrieben wird, um das Erhöhen der Temperatur des ersten Mediums gezielt zu bewirken.

**6.** Verfahren nach einem der Ansprüche 3 bis 5,
**dadurch gekennzeichnet, dass**
das gezielte Übertragen der Wärme von dem Antriebsmotor (12) auf das Getriebe (20) umfasst, dass wenigstens eine Strömung des ersten Mediums und/oder des zweiten Mediums durch den Wärmetauscher (26) hindurch gezielt eingestellt wird.

**Claims**

**1.** Method for operating a drive train (10), having at least one drive motor (12) and at least one transmission (20), of a motor vehicle which is able to be driven by the drive motor (12) via the transmission (20), in which heat is transferred in a targeted manner to the transmission (20) from the drive motor (12), whereby the transmission (20) is heated in a targeted manner, wherein the heat is transferred in a targeted manner to the transmission (20) from the drive motor (12) according to predictive data that characterize at least one future state of the motor vehicle,
**characterized in that**
the heat is transferred in a targeted manner to the transmission (20) from the drive motor (12) also according to at least one efficiency value that is stored in a memory device of an electronic computing device (22) of the drive train (10) and that characterizes an efficiency or a power loss of the transmission (20).

**2.** Method according to Claim 1,
**characterized in that**
the heat is transferred in a targeted manner to the transmission (20) from the drive motor (12) also according to at least one limit value that characterizes a maximum permissible temperature of the transmission (20).

**3.** Method according to either of the preceding claims,
**characterized in that**
the targeted transfer of the heat from the drive motor (12) to the transmission (20) comprises transfer of the heat from the drive motor (12) to at least one first medium for cooling the drive motor (12), from the first medium to at least one second medium via at least one heat exchanger (26), and from the second medium to the transmission (20).

**4.** Method according to Claim 3,
**characterized in that**
the targeted transfer of the heat from the drive motor (12) to the transmission (20) comprises targeted increase in a temperature of the first medium.

**5.** Method according to Claim 4,
**characterized in that**
the targeted increase in the temperature of the first medium comprises targeted operation of the drive motor (12) so as to bring about the increase in the temperature of the first medium in a targeted manner.

**6.** Method according to one of Claims 3 to 5,
**characterized in that**
the targeted transfer of the heat from the drive motor (12) to the transmission (20) comprises targeted setting of at least one flow of the first medium and/or of the second medium through the heat exchanger (26).

**Revendications**

1. Procédé de fonctionnement d'une chaîne cinématique (10) comportant au moins un moteur d'entraînement (12) et au moins une transmission (20) d'un véhicule automobile pouvant être entraîné par le moteur d'entraînement (12) par le biais de la transmission (20), procédé dans lequel la chaleur du moteur d'entraînement (12) est transférée de manière ciblée à la transmission (20) ce qui chauffe la transmission (20) de manière ciblée,

   la chaleur étant transférée de manière ciblée du moteur d'entraînement (12) à la transmission (20) en fonction de données prédictives qui caractérisent au moins un état futur du véhicule automobile,
   **caractérisé en ce que**
   la chaleur est également transférée de manière ciblée du moteur d'entraînement (12) à la transmission (20) en fonction d'au moins une valeur de rendement qui est mémorisée dans un dispositif de mémorisation d'un dispositif informatique électronique (22) de la chaîne cinématique (10) et qui caractérise un rendement ou une perte de puissance de la transmission (20).

2. Procédé selon la revendication 1,
   **caractérisé en ce que**
   la chaleur est également transférée de manière ciblée du moteur d'entraînement (12) à la transmission (20) en fonction d'au moins une valeur limite qui caractérise une température maximale admissible de la transmission (20).

3. Procédé selon l'une des revendications précédentes,
   **caractérisé en ce que**
   le transfert ciblé de la chaleur du moteur d'entraînement (12) à la transmission (20) comprend le transfert de la chaleur du moteur d'entraînement (12) à au moins un premier milieu de refroidissement du moteur d'entraînement (12), du premier milieu par le biais d'au moins un échangeur de chaleur (26) à au moins un deuxième milieu et du deuxième milieu à la transmission (20).

4. Procédé selon la revendication 3,
   **caractérisé en ce que**
   le transfert ciblé de la chaleur du moteur d'entraînement (12) à la transmission (20) comprend l'augmentation ciblée de la température du premier milieu.

5. Procédé selon la revendication 4,
   **caractérisé en ce que**
   l'augmentation ciblée de la température du premier milieu comprend le fonctionnement ciblé du moteur d'entraînement (12) afin d'augmenter de manière ciblée la température du premier milieu.

6. Procédé selon l'une des revendications 3 à 5,
   **caractérisé en ce que**
   le transfert ciblé de la chaleur du moteur d'entraînement (12) à la transmission (20) comprend le réglage ciblé d'au moins un écoulement du premier milieu et/ou du deuxième milieu à travers l'échangeur de chaleur (26).

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015014841 B3
- DE 19637817 A1
- DE 102017101212 A1
- DE 102017101454 A1